# EUROPÄISCHE PATENTSCHRIFT

(11) **EP 3 448 634 B1**
(45) Veröffentlichungstag und Bekanntmachung des Hinweises auf die Patenterteilung: **11.03.2026**
(21) Anmeldenummer: 17721565.4
(22) Anmeldetag: 24.04.2017
(51) Int. Cl.: B25J 9/16, G05B 19/402

(54) **VERFAHREN ZUM FÜGEN EINES GEGENSTANDES IN EINE GEGENSTANDSAUFNAHME MITTELS EINES ROBOTERMANIPULATORS**
METHOD FOR JOINING AN OBJECT INTO AN OBJECT RECEIVING AREA USING A ROBOT MANIPULATOR
PROCÉDÉ D'ASSEMBLAGE D'UN OBJET DANS UN LOGEMENT D'OBJET AU MOYEN D'UN MANIPULATEUR DE ROBOT

(30) Priorität: 24.04.2016 DE 102016004942; 27.04.2016 DE 102016107842
(43) Veröffentlichungstag der Anmeldung: 06.03.2019
(73) Patentinhaber: FR Administration GmbH, 81369 München (DE)
(72) Erfinder: HADDADIN, Sami, 30173 Hannover (DE)
(74) Vertreter: Cohausz & Florack
(86) Internationale Anmeldenummer: PCT/EP2017/059650
(87) Internationale Veröffentlichungsnummer: WO 2017/186637

(56) Entgegenhaltungen:
- DE-A1- 102010 012 598
- GB-A- 2 174 360
- US-A1- 2008 267 737
- SCHWEIGERT U: "VIBRATIONSUNTERSTUETZUNG ERMOEGLICHT PRAEZISIONSMONTAGE", TECHNISCHE RUNDSCHAU,, vol. 84, no. 6, 7 February 1992 (1992-02-07), pages 48 - 52, XP000247720, ISSN: 1023-0823

## Beschreibung

Die Erfindung betrifft ein Verfahren zum Fügen eines Gegenstandes in eine Gegenstandsaufnahme mittels eines Robotermanipulators. Weiterhin betrifft die Erfindung einen Robotermanipulator.

"Vibrationsunterstützung ermöglicht Präzisionsmontage" (SCHWEIGERT, U.), 7. Februar 1992; GB 2 174 360 A und US 2008/267737 A1 offenbaren gattungsgleiche Verfahren.

Die Aufgabe der Erfindung ist es, ein einfaches und robustes Verfahren zum Fügen eines Gegenstandes in eine Gegenstandsaufnahme mittels eines Robotermanipulators anzugeben. Darüber hinaus ist es Aufgabe einen Robotermanipulator anzugeben, der zum Fügen eines Gegenstandes in eine Gegenstandsaufnahme mittels eines Robotermanipulators ausgeführt eingerichtet ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in der Figur dargestellt sind.

Das vorgeschlagene Verfahren umfasst folgende Verfahrensschritte. In einem ersten Schritt erfolgt ein Aufnehmen/Greifen des Gegenstandes durch den Effektor. Der Effektor weist eine hierfür erforderliche mechanische Schnittstelle auf, und ist vorteilhaft als Greifer, künstliche Hand, Werkzeug etc. ausgebildet.

In einem zweiten Schritt erfolgt unter kraftgeregelten und/oder impedanzgeregelten Dreh-/Kippbewegungen des Gegenstands relativ zur Soll-Orientierung *Oₛₒₗₗ*(*3̅R̅_{T}*) ein Bewegen des Gegenstandes mittels des Robotermanipulators entlang der Fügetrajektorie *T* in die Gegenstandsaufnahme bis eine vorgegebene Grenzwertbedingung G1 für ein am Effektor wirkendes Moment und/oder eine am Effektor wirkende Kraft erreicht oder überschritten wird, und/oder bis eine bereitgestellte Kraft-/Momenten-Signatur und/oder eine Positions-/Geschwindigkeitssignatur am Effektor erreicht oder überschritten wird, die indiziert/indizieren, dass das Fügen des Gegenstandes in die Gegenstandsaufnahme innerhalb vordefinierter Toleranzen erfolgreich abgeschlossen ist.

Der Robotermanipulator ist vorteilhaft dazu ausgeführt und eingerichtet, einen ausgezeichneten Punkt des Effektors (beispielsweise den sogenannten "Tool Center Point" TCP) bzw. einen ausgezeichneten Punkt des Gegenstands (beispielsweise seinen Schwerpunkt oder geometrischen Mittelpunkt) entlang einer vorgegebenen Trajektorie zu bewegen.

Die Fügetrajektorie *T* wird vorteilhaft abhängig von der relativen Ausgangsposition des am Effektor angeordneten Gegenstandes zur Gegenstandsaufnahme, von der Geometrie des Gegenstandes und von der Geometrie der Gegenstandsaufnahme vorgegeben.

Die Fügetrajektorie *T* ist typischerweise eine dreidimensionale ein- oder mehrfach gekrümmte Kurve. Natürlich sind auch gerade Linien als Fügetrajektorie *T* möglich.

In einem dritten Schritt erfolgt ein Freigeben des Gegenstandes durch den Effektor. Alternativ kann der Effekt der den Gegenstand einfach loslassen. Das Freigeben erfolgt vorteilhaft unter kraftgeregelten und/oder impedanzgeregelten Dreh-/Kippbewegungen.

In einem vierten Schritt wird der Effektor mittels des Robotermanipulators entlang einer Ausgangstrajektorie *A* von der Gegenstandsaufnahme weg bewegt.

Durch die erfindungsgemäßen kraftgeregelten und/oder impedanzgeregelten Dreh-/Kippbewegungen beim Fügen des Gegenstandes in die Gegenstandsaufnahme des Effektors wird die Erfolgsquote des Fügeprozesses erheblich gesteigert.

Eine vorteilhafte Weiterbildung des vorgeschlagenen Verfahrens zeichnet sich dadurch aus, dass der Effektor mit dem Gegenstand im zweiten und dritten Schritt des Verfahrens zusätzlich zu den Dreh-/Kippbewegungen translatorische laterale Bewegungen um die Fügetrajektorie *T* / Ausgangstrajektorie *A* ausführt. Durch diese Maßnahme wird die vorstehend angeführte Erfolgsquote des Fügeprozesses bzw. des Endform Prozesses weiter gesteigert.

In einer vorteilhaften Variante des Verfahrens sind die Fügetrajektorie *T* und die Ausgangstrajektorie A identisch. Im typischen allgemeinen Fall wird die Fügetrajektorie *T* und die Ausgangstrajektorie *A* vorteilhaft unterschiedlich gewählt, wodurch Taktzeiten durch zeitoptimierte Ausgangstrajektorie *A* verkürzt werden können.

Eine vorteilhafte Weiterbildung des vorgeschlagenen Verfahrens zeichnet sich dadurch aus, dass die Dreh-/Kippbewegungen im zweiten und/oder dritten Schritt den Gegenstand um eine, zwei oder drei Dreh-/Kippachsen gegen die Soll-Orientierung *Oₛₒₗₗ*(*R̅_{T}*) drehen/kippen, wobei das Drehen/Kippen des Gegenstandes um die jeweilige Dreh-/Kippachse in einem Winkelbereich bis zu ±1°, ±2°, ±5°, ±7°, ±10°, ±12°, ±15° zur Soll-Orientierung *Oₛₒₗₗ*(*R̅_{T}*) erfolgt.

Das Fügen des Gegenstandes in die Gegenstandsaufnahme erfolgt vorteilhaft durch Einrasten, Einschrauben, Anpressen, Einpressen, Kleben, Löten, Schrumpfen.

Die Gegenstandsaufnahme weist zumindest eine von außen zugängliche Öffnung auf. Diese Öffnung ist weiterhin derart dimensioniert, dass der Gegenstand durch die Öffnung in die Gegenstandsaufnahme gefügt werden kann. Das Verfahren ist somit grundsätzlich zum Fügen von Gegenständen in eine Gegenstandsaufnahme geeignet, die die vorstehend beschriebenen Voraussetzungen erfüllen, und die von einem Robotermanipulator bzw. dessen Effekte gehandhabt werden können.

Eine Weiterbildung des Verfahrens zeichnet sich dadurch aus, dass sofern beim Aufnehmen/Greifen des Gegenstandes durch den Effektor ein Fehler auftritt, das Aufnehmen/Greifen des Gegenstandes durch den Effektor mit veränderten Parametern für das Aufnehmen/Greifen des Gegenstandes wiederholt wird. Ein solcher Fehler beim Aufnehmen/Greifen des Gegenstandes kann beispielsweise durch an Effektor und/oder am Robotermanipulator angeordnete Kraft- und/ Positionssensoren, optische Sensoren, Ultraschallsensoren, etc. erkannt werden.

Die veränderten Parameter für das Aufnehmen/Greifen des Gegenstandes können sowohl in einer Trajektorienplanung für den Robotermanipulator als auch in einer Steuerungs- und Regelungseinheit des Roboters bzw. des Robotermanipulators ermittelt werden. Eine Anpassung einer Soll-Trajektorie für das Aufnehmen/Greifen des Gegenstandes kann beispielsweise basierend auf den am Effektor gespürten Kräften oder Momenten erfolgen. Alternativ oder zusätzlich kann ein Relaxieren eines zur Steuerung des Robotermanipulators zum Aufnehmen/Greifen des Gegenstandes eingesetzter Impedanzregler, ungewünscht hohe Prozesskräfte verkleinern.

Eine vorteilhafte Weiterbildung des Verfahrens zeichnet sich dadurch aus, dass sofern beim Bewegen des Gegenstandes mittels des Robotermanipulators entlang der Fügetrajektorie *T* in die Gegenstandsaufnahme ein Fehler auftritt, das Bewegen des Gegenstandes mittels des Robotermanipulators in die Gegenstandsaufnahme mit einer veränderten Fügetrajektorie *T** und/oder mit veränderten Parametern für die kraftgeregelten und/oder impedanzgeregelten Dreh-/Kippbewegungen des Gegenstands relativ zur Soll-Orientierung *Oₛₒₗₗ*(*R̅_{T}*) wiederholt wird. Ein solcher Fehler beim Bewegen des Gegenstandes in die Gegenstandsaufnahme kann beispielsweise durch an Effektor und/oder am Robotermanipulator angeordnete Kraft- und/ Positionssensoren, optische Sensoren, Ultraschallsensoren, etc. erkannt werden. Die veränderten Parameter für die kraftgeregelten und/oder impedanzgeregelten Dreh-/Kippbewegungen des Gegenstands relativ zur Soll-Orientierung *Oₛₒₗₗ*(*R̅_{T}*) können sowohl in einer Trajektorienplanung für den Robotermanipulator als auch in einer Steuerungs- und Regelungseinheit des Roboters bzw. des Robotermanipulators ermittelt werden.

Eine vorteilhafte Weiterbildung des Verfahrens zeichnet sich dadurch aus, dass sofern Fehler oder andere Fehler als die zuvor beschriebenen Fehler bei der Ausführung des Verfahrens auftreten, eine Warnung ausgegeben wird und/oder die Ausführung des Verfahrens abgebrochen wird.

Das erfindungsgemäße Verfahren zeichnet sich dadurch aus, dass die Dreh-/Kippbewegungen geschlossenen zyklischen Bewegungen, insbesondere Lissajous-Figuren in zwei bis sechs Dimensionen oder Fourierreihen oder Rechteckbewegungen oder Gaußumkehrungen, etc. entsprechen.

Eine vorteilhafte Weiterbildung des Verfahrens zeichnet sich dadurch aus, dass die translatorischen lateralen Bewegungen des Gegenstandes um die Fügetrajektorie *T* geschlossenen oder nicht geschlossenen zyklischen Bewegungen, insbesondere Lissajous-Figuren in zwei bis sechs Dimensionen oder Fourierreihen, Rechteckbewegungen, Gaußumkehrungen, etc. entsprechen.

Ein weiterer Aspekt der Erfindung betrifft ein Computersystem nach Anspruch 7.

Ein weiterer Aspekt der Erfindung betrifft ein digitales Speichermedium nach Anspruch 8.

Ein weiterer Aspekt der Erfindung betrifft ein Computer-Programm-Produkt nach Anspruch 9.

Ein weiterer Aspekt der Erfindung betrifft ein Computer-Programm nach Anspruch 10.

Ein weiterer Aspekt der bis Erfindung betrifft einen Roboter nach Anspruch 11.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

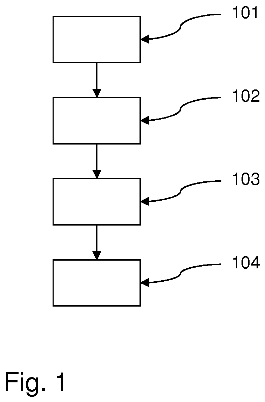

- Fig. 1: ein Ablaufschema eines vorgeschlagenen Verfahrens.

**Fig. 1** zeigt ein Ablaufschema eines vorgeschlagenen Verfahrens zum Fügen eines Gegenstandes in eine Gegenstandsaufnahme mittels eines aktorisch angetriebenen Robotermanipulators eines Roboters und zur Steuerung des Robotermanipulators, wobei der Robotermanipulator an seinem distalen Ende einen Effektor aufweist, der zur Aufnahme und/oder zum Greifen des Gegenstandes ausgeführt ist, und wobei für die Gegenstandsaufnahme und den zu fügenden Gegenstand eine Fügetrajektorie *T* und entlang der Fügetrajektorie *T* für Orte *R̅_{T}* der Fügetrajektorie *T* eine Soll-Orientierung *Oₛₒₗₗ*(*R̅_{T}*) des zu fügenden Gegenstandes definiert sind.

Das Verfahren umfasst folgende Schritte. In einem ersten Schritt **101** erfolgt ein Aufnehmen/Greifen des Gegenstandes durch den Effektor.

In einem zweiten Schritt **102** erfolgt unter kraftgeregelten und/oder impedanzgeregelten Dreh-/Kippbewegungen des Gegenstands relativ zur Soll-Orientierung *Oₛₒₗₗ*(*R̅_{T}*) ein Bewegen des Gegenstandes mittels des Robotermanipulators entlang der Fügetrajektorie *̅T̅*̅ in die Gegenstandsaufnahme bis eine vorgegebene Grenzwertbedingung G1 für ein am Effektor wirkendes Moment und/oder eine am Effektor wirkende Kraft erreicht oder überschritten wird, und/oder bis eine bereitgestellte Kraft-/Momenten-Signatur und/oder eine Positions-/Geschwindigkeitssignatur am Effektor erreicht oder überschritten wird, die indiziert/indizieren, dass das Fügen des Gegenstandes in die Gegenstandsaufnahme innerhalb vordefinierter Toleranzen erfolgreich abgeschlossen ist.

Nach erfolgreichem Abschluss des Schrittes **102** erfolgt in Schritt **103** unter kraftgeregelten und/oder impedanzgeregelten Dreh-/Kippbewegungen ein Freigeben des Gegenstandes durch den Effektor.

In Schritt **104** erfolgt ein Wegbewegen des Effektors mittels des Robotermanipulators entlang einer vorgegebenen Ausgangstrajektorie *A*.

### Bezugszeichenliste

- 101- 104: Verfahrensschritte

## Patentansprüche

1. Verfahren zum Fügen eines Gegenstandes in eine Gegenstandsaufnahme mittels eines aktorisch angetriebenen Robotermanipulators eines Roboters und zur Steuerung des Robotermanipulators, wobei der Robotermanipulator an seinem distalen Ende einen Effektor aufweist, der zur Aufnahme und/oder zum Greifen des Gegenstandes ausgeführt ist, und wobei für die Gegenstandsaufnahme und den zu fügenden Gegenstand eine Fügetrajektorie *T* und entlang der Fügetrajektorie *T* für Orte *R̅_{T}* der Fügetrajektorie *T* eine Soll-Orientierung *Oₛₒₗₗ*(*R̅_{T}*) des zu fügenden Gegenstandes definiert sind, mit folgenden Verfahrensschritten:
1.1. Aufnehmen/Greifen (101) des Gegenstandes durch den Effektor,
1.2. unter kraftgeregelten und/oder impedanzgeregelten geschlossenen zyklischen Dreh-/Kippbewegungen des Gegenstands relativ zur Soll-Orientierung *Oₛₒₗₗ*(*R̅_{T}*) Bewegen (202) des Gegenstandes mittels des Robotermanipulators entlang der Fügetrajektorie *̅T̅*̅ in die Gegenstandsaufnahme bis
• eine vorgegebene Grenzwertbedingung G1 für ein am Effektor wirkendes Moment und/oder eine am Effektor wirkende Kraft erreicht oder überschritten wird, und/oder
• eine bereitgestellte Kraft-/Momenten-Signatur und/oder eine Positions-/Geschwindigkeitssignatur am Effektor erreicht oder überschritten wird, die indiziert/indizieren, dass das Fügen des Gegenstandes in die Gegenstandsaufnahme innerhalb vordefinierter Toleranzen erfolgreich abgeschlossen ist,
1.3. Freigeben (103) des Gegenstandes durch den Effektor,
1.4. Wegbewegen (104) des Effektors von der Gegenstandsaufnahme mittels des Robotermanipulators entlang einer vorgegebenen Ausgangstrajektorie *A*.

2. Verfahren nach Anspruch 1,
bei dem das Freigeben (103) unter kraftgeregelten und/oder impedanzgeregelten Dreh-/Kippbewegungen erfolgt.

3. Verfahren nach Anspruch 1 oder 2,
bei dem der Effektor mit dem Gegenstand in Schritt 1.2. und/oder in Schritt 1.3. zusätzlich translatorische laterale Bewegungen um die Fügetrajektorie *T* / Ausgangstrajektorie *A* ausgeführt.

4. Verfahren nach einem der Ansprüche 1 bis 3,
bei dem die Dreh-/Kippbewegungen in Schritt 1.2. und/oder in Schritt 1.3. den Gegenstand um eine, zwei oder drei Dreh-/Kippachsen zur Soll-Orientierung *Oₛₒₗₗ*(*R̅_{T}*) drehen/kippen, wobei das Drehen/Kippen des Gegenstandes um die jeweilige Dreh-/Kippachse in einem Winkelbereich bis zu ±1°, ±2°, ±5°, ±7°, ±10°, ±12°, ±15° zur Soll-Orientierung *Oₛₒₗₗ*(*R̅_{T}*) erfolgt.

5. Verfahren nach einem der Ansprüche 1 bis 4,
bei dem sofern beim Aufnehmen/Greifen des Gegenstandes durch den Effektor ein Fehler auftritt, das Aufnehmen/Greifen des Gegenstandes durch den Effektor mit veränderten Parametern für das Aufnehmen/Greifen des Gegenstandes wiederholt wird.

6. Verfahren nach einem der Ansprüche 1 bis 5,
bei dem sofern beim Bewegen des Gegenstandes mittels des Robotermanipulators entlang der Fügetrajektorie *T* in der Fügerichtung in die Gegenstandsaufnahme ein Fehler auftritt, das Bewegen des Gegenstandes mittels des Robotermanipulators in die Gegenstandsaufnahme mit einer veränderten Fügetrajektorie *T** und/oder mit veränderten Parameters für die kraftgeregelten und/oder impedanzgeregelten Dreh-/Kippbewegungen des Gegenstands relativ zur Soll-Orientierung *Oₛₒₗₗ*(*R̅_{T}*) wiederholt wird.

7. Computersystem mit einer Datenverarbeitungsvorrichtung, wobei die
Datenverarbeitungsvorrichtung derart ausgestaltet ist, einen Roboter zur Ausführung des Verfahrens nach einem der vorhergehenden Ansprüche 1 bis 6 anzusteuern.

8. Digitales Speichermedium mit elektronisch auslesbaren Steuersignalen, wobei die Steuersignale so mit einem programmierbaren Computersystem zusammenwirken, dass ein Verfahren nach einem der vorhergehenden Ansprüche 1 bis 6 durch einen Roboter ausgeführt wird.

9. Computer-Programm-Produkt mit einem auf einem maschinenlesbaren Träger gespeicherten Programmcode, eingerichtet, einen Roboter zur Ausführung des Verfahrens nach einem der vorhergehenden Ansprüche 1 bis 6 anzusteuern, wenn der Programmcode auf einer Datenverarbeitungsvorrichtung ausgeführt wird.

10. Computer-Programm mit Programmcodes, eingerichtet, einen Roboter zur Ausführung des Verfahrens nach einem der vorhergehenden Ansprüche 1 bis 6 anzusteuern, wenn das Programm auf einer Datenverarbeitungsvorrichtung abläuft.

11. Roboter mit einem aktorisch angetriebenen Robotermanipulator, wobei der Robotermanipulator an seinem distalen Ende einen Effektor aufweist, der zur Aufnahme/Greifen eines Gegenstandes ausgeführt ist, aufweisend eine Steuereinheit, die derart ausgeführt und eingerichtet ist, den Roboter zur Ausführung des Verfahrens nach einem der vorhergehenden Ansprüche 1 bis 5 anzusteuern.

## Claims

1. Method for joining an object into an object receptacle by means of an actuator-driven robot manipulator of a robot and for controlling the robot manipulator, wherein the robot manipulator has an effector at its distal end, which is arranged to pick up and/or grip the object, and wherein a joining trajectory T is defined for the object receptacle and the object to be joined, and a target orientation Oₛₒₗₗ*₍**̅R̅*̅_̅{̅T̅}̅*)* of the object to be joined is defined for locations *̅R̅*̅_̅{̅T̅}̅ of the joining trajectory T along the joining trajectory T, comprising the following method steps:
1.1 Picking up/gripping (101) the object by the effector,
1.2 Moving (202) the object by means of the robot manipulator along the joining trajectory T into the object receptacle by means of force-controlled and/or impedance-controlled closed cyclic rotational/tilting movements of the object relative to the target orientation Oₛₒₗₗ*₍**̅R̅*̅_̅{̅T̅}̅*)* until
• a predetermined threshold condition G1 for a torque acting on the effector and/or a force acting on the effector is reached or exceeded, and/or
• a provided force/torque signature and/or a position/velocity signature at the effector is reached or exceeded, which indicates/indicate that the joining of the object into the object receptacle has been successfully completed within predefined tolerances.
1.3 Releasing (103) the object by the effector,
1.4 moving (104) the effector away from the object receptacle by means of the robot manipulator along a predetermined exit trajectory A.

2. Method according to claim 1,
in which the release (104) is performed under force-controlled and/or impedance-controlled rotational/tilting movements.

3. Method according to claim 1 or 2,
in which the effector with the object in step 1.2. and/or in step 1.3. additionally performs translational lateral movements around the joining trajectory T / initial trajectory A.

4. Method according to one of claims 1 to 3,
in which the rotationally/tilting movements in step 1.2 and/or in step 1.3 rotate/tilt the object about one, two, or three rotary/tilt axes to the target orientation Oₛₒₗₗ*₍**̅R̅*̅_̅{̅T̅}̅*)*, wherein the rotation/tilting of the object about the respective rotation/tilting axis takes place within an angle range of up to ± 1°, ± 2°, ± 5°, ± 7°, ± 10°, ± 12°, ± 15° relative to the target orientation Oₛₒₗₗ*₍**̅R̅*̅_̅{̅T̅}̅*)*.

5. Method according to one of claims 1 to 4,
in which, if an error occurs when the object is picked up/gripped by the effector, the picking up/gripping of the object by the effector is repeated with modified parameters for picking up/gripping the object.

6. Method according to one of claims 1 to 5,
in which, if an error occurs when moving the object by means of the robot manipulator along the joining trajectory T in the joining direction into the object receptacle, the object is moved by means of the robot manipulator into the object receptacle with a modified joining trajectory T* and/or with modified parameters for the force-controlled and/or impedance-controlled rotational/tilting movements of the object relative to the target orientation Oₛₒₗₗ*₍R̅*_{T}*)*.

7. Computer system with a data processing device, wherein the data processing device is designed to control a robot for performing the method according to one of the preceding claims 1 to 6.

8. Digital storage medium with electronically readable control signals, wherein the control signals interact with a programmable computer system in such a way that a method according to one of the preceding claims 1 to 6 is performed by a robot.

9. Computer program product with a program code stored on a machine-readable medium, designed to control a robot to execute the method according to one of the preceding claims 1 to 6 when the program code is executed on a data processing device.

10. Computer program with program codes configured to control a robot to execute the method according to one of the preceding claims 1 to 6 when the program runs on a data processing device.

11. Robot with an actuator-driven robot manipulator, wherein the robot manipulator has an effector at its distal end which is designed to pick up/grasp an object, comprising a control unit which is designed and configured to control the robot to perform the method according to one of the preceding claims 1 to 5.

## Revendications

1. Méthode pour assembler un objet dans un logement d'objet à l'aide d'un manipulateur robot d'un robot actionné par actionneur et pour commander le manipulateur robot, le manipulateur robot ayant à son extrémité distale un effecteur qui est configuré pour recevoir et/ou saisir l'objet, et où une trajectoire d'assemblage T est définie pour le logement d'objet et l'objet à assembler, et une orientation de consigne *Oₛₒₗₗ₍**̅R̅*̅_̅{̅T̅}̅*)* de l'objet à assembler est définie le long de la trajectoire d'assemblage T pour des emplacements *̅R̅*̅_̅{̅T̅}̅ de la trajectoire d'assemblage T, avec les étapes de procédé suivantes :
1.1 recevoir/saisir (101) de l'objet par l'effecteur,
1.2 déplacer (202) l'objet au moyen du manipulateur robot le long de la trajectoire d'assemblage T dans le logement de l'objet pendant des mouvements cycliques fermés de rotation/basculement de l'objet, régulés en force et/ou en impédance, par rapport à l'orientation de consigne *Oₛₒₗₗ₍**̅R̅*̅_̅{̅T̅}̅*)*, jusqu'à ce que
• une condition limite prédéfinie G1 pour un moment agissant sur l'effecteur et/ou une force agissant sur l'effecteur est atteinte ou dépassée, et/ou
• une signature de force/couple et/ou une signature de position/vitesse prévue au niveau de l'effecteur est atteinte ou dépassée, ce qui indique que l'assemblage de l'objet dans le logement d'objet est terminé avec succès dans des tolérances prédéfinies.
1.3 libérer (103) l'objet par l'effecteur,
1.4 éloigner (104) l'effecteur du logement d'objet à l'aide du manipulateur robotique le long d'une trajectoire de sortie prédéfinie A.

2. Méthode selon la revendication 1,
dans lequel la libération (104) s'effectue pendant des mouvements de rotation/basculement, régulés en force et/ou impédance.

3. Méthode selon la revendication 1 ou 2,
dans lequel l'effecteur avec l'objet supplémentairement effectue, à l'étape 1.2 et/ou à l'étape 1.3, des mouvements latéraux de translation autour de la trajectoire d'assemblage T / trajectoire de sortie A.

4. Méthode selon l'une des revendications 1 à 3,
dans lequel les mouvements de rotation/basculement à l'étape 1.2 et/ou à l'étape 1.3 font tourner/basculer l'objet autour d'un, deux ou trois axes de rotation/basculement jusqu'à l'orientation de consigne *Oₛₒₗₗ₍**̅R̅*̅_̅{̅T̅}̅*)*, où la rotation/ basculement de l'objet autour de l'axe de rotation/ basculement respectif s'effectue dans une plage angulaire allant jusqu'à ± 1°, ± 2°, ± 5°, ± 7°, ± 10°, ± 12°, ± 15€ par rapport à l'orientation de consigne *Oₛₒₗₗ₍**̅R̅*̅_̅{̅T̅}̅*)*.

5. Méthode selon l'une des revendications 1 à 4,
dans lequel, si une erreur se produit lors de la réception/saisie de l'objet par l'effecteur, la réception /saisie de l'objet par l'effecteur est répétée avec des paramètres modifiés pour la réception /saisie de l'objet.

6. Méthode selon l'une des revendications 1 à 5,
dans lequel, si une erreur se produit lors du déplacement de l'objet au moyen du manipulateur robot le long de la trajectoire d'assemblage T dans la direction d'assemblage vers le logement d'objet, le déplacement de l'objet au moyen du manipulateur robot vers le logement d'objet s'effectue avec une trajectoire d'assemblage modifiée T* et/ou avec des paramètres modifiés pour les mouvements de rotation/basculement de l'objet régulés en force et/ou en impédance par rapport à l'orientation de consigne *Oₛₒₗₗ₍**̅R̅*̅_̅{̅T̅}̅*)*.

7. Système informatique comprenant un dispositif de traitement de données, où le dispositif de traitement de données est configuré pour commander un robot afin d'exécuter la méthode selon l'une des revendications 1 à 6 précédentes.

8. Support de stockage numérique avec des signaux de commande lisibles électroniquement, où les signaux de commande interagissant avec un système informatique programmable de telle sorte qu'une méthode selon l'une des revendications 1 à 6 précédentes est exécuté par un robot.

9. Produit logiciel comprenant un code de programme stocké sur un support lisible par machine, configuré pour commander un robot afin d'exécuter la méthode selon l'une des revendications 1 à 6 précédentes lorsque le code de programme est exécuté sur un dispositif de traitement de données.

10. Programme informatique avec des codes de programme, configuré pour commander un robot afin qu'il exécute la méthode selon l'une des revendications 1 à 6 précédentes lorsque le programme est exécuté sur un dispositif de traitement de données.

11. Robot avec un manipulateur robot à entraînement par actionneur, où le manipulateur robot a à son extrémité distale un effecteur configuré pour recevoir/saisir un objet, comprenant une unité de commande qui est conçue et configurée pour commander le robot afin qu'il exécute la méthode selon l'une des revendications 1 à 5 précédentes.
